# EUROPÄISCHE PATENTSCHRIFT

(11) **EP 1 032 773 B1**
(45) Veröffentlichungstag und Bekanntmachung des Hinweises auf die Patenterteilung: **24.09.2003**
(21) Anmeldenummer: 98958908.0
(22) Anmeldetag: 20.11.1998
(51) Int. Cl.: F16D 65/16

(54) **ELEKTROMECHANISCH BETÄTIGBARE SCHEIBENBREMSE**
ELECTROMECHANICALLY ACTUATED DISC BRAKE
FREIN A DISQUE A ACTIONNEMENT ELECTROMECANIQUE

(30) Priorität: 21.11.1997 DE 19751617; 05.02.1998 DE 19804454
(43) Veröffentlichungstag der Anmeldung: 06.09.2000
(73) Patentinhaber: Continental Teves AG & Co. OHG, 60488 Frankfurt am Main (DE)
(72) Erfinder: SCHWARZ, Ralf, D-69118 Heidelberg (DE)
(86) Internationale Anmeldenummer: EP9807472
(87) Internationale Veröffentlichungsnummer: WO99027270

(56) Entgegenhaltungen:
- EP-A- 0 334 434
- EP-A- 0 398 531
- DE-A- 19 511 287
- DE-A- 19 621 533
- US-A- 5 549 183

## Beschreibung

Die Erfindung betrifft eine mittels eines Elektromotors unter Zwischenschaltung eines ein axial bewegliches Teil aufweisenden Untersetzungsgetriebes betätigbare Scheibenbremse für Kraftfahrzeuge mit einem Bremssattel, mit zwei mit je einer Seitenfläche einer Bremsscheibe zusammenwirkenden, im Bremssattel begrenzt verschiebbar angeordneten Reibbelägen, wobei einer der Reibbeläge durch das axial bewegliche Teil direkt und der andere Reibbelag durch die Wirkung einer vom Bremssattel aufgebrachten Reaktionskraft mit der Bremsscheibe in Eingriff bringbar ist, wobei eine Feststellvorrichtung vorgesehen ist, die mit einem sich rotatorisch bewegenden Teil des Untersetzungsgetriebes oder einem mit dem Untersetzungsgetriebe in kraftübertragender Verbindung stehenden Teil im Sinne dessen Blockierens zusammenwirkt.

Eine elektromechanisch betätigbare Scheibenbremse ist z.B. aus der DE 195 11 287 A1 bekannt. Die Betätigungseinheit der bekannten Scheibenbremse besteht aus einem Elektromotor, einem Betätigungselement sowie einem zwischen Elektromotor und Betätigungselement angeordneten Untersetzungsgetriebe, das als ein Rollengewindetrieb mit Rückführung der Gewinderollen ausgebildet ist. Durch eine Axialverschiebung der Spindel des Rollengewindetriebs wird der der Betätigungseinheit zugeordnete Reibbelag in Eingriff mit der Bremsscheibe gebracht. Das Betätigungselement wird bei der vorbekannten Scheibenbremse durch die Spindel des Rollengewindetriebs gebildet, dessen Gewindemutter vom Elektromotor angetrieben wird, um eine entsprechende Spannkraft zu erzeugen. Der Lagerung der Gewindemutter dient ein im Bremssattel angeordnetes Kreuzrollenlager großen Durchmessers. Die bekannte elektromechanisch betätigbare Scheibenbremse weist jedoch keine Mittel zum Realisieren einer Feststellbremsfunktion auf.

Eine mit einer Feststellbremse kombinierte, elektrisch betätigbare Scheibenbremse ist aus der DE 196 01 983 C1 bekannt. Bei der vorbekannten Scheibenbremse übernimmt der elektromechanische Aktuator sowohl die Betriebsbrems- als auch die Feststellbremsfunktion. Die Feststellfunktion wird dabei dadurch realisiert, dass ein mittels eines Elektromagneten betätigbarer Metallstift mit einem Reibkopf vorgesehen ist, der gegen die Spindelmutter eines Untersetzungsgetriebes angedrückt wird, wodurch eine Reibungskraft entsteht, die zur Selbsthemmung der Zuspannvorrichtung und somit zur Fixierung der Bremsbeläge führt.

Weniger vorteilhaft anzusehen ist bei der vorbekannten Bremse der verhältnismäßig große Bauraum, der erforderlich ist, um eine auf die Gewindemutter seitlich einwirkende Kraft aufzubringen. Ein weiterer Nachteil besteht darin, daß der Betrag der Erhöhung der inneren Reibung stark schwankend und von verschiedenen Umweltbedingungen, wie Verschleiß, Temperatur oder dgl. abhängig ist.

Es ist daher Aufgabe der vorliegenden Erfindung, eine elektromechanisch betätigbare Scheibenbremse der eingangs genannten Gattung dahingehend zu verbessern, dass unter Verwendung von kostengünstig herstellbaren Teilen der für die Realisierung der Feststellfunktion benötigte Bauraum klein gehalten werden kann. Außerdem soll die Feststellbremsfunktion gar nicht bzw. nur in geringem Maße von Umweltbedingungen wie Verschleiß, Temperatur o. dgl. abhängig sein.

Diese Aufgabe wird erfindungsgemäß dadurch gelöst, dass die Feststellvorrichtung als Arretiereinheit ausgeführt ist.

Eine besonders vorteilhafte Weiterbildung des Erfindungsgegenstandes zeichnet sich dadurch aus, dass die Feststellvorrichtung durch einen mittels eines elektromechanischen Wandlers, vorzugsweise eines Hubmagneten, betätigbaren Stößel gebildet ist, der mit dem sich rotatorisch bewegenden Teil zusammenwirkt und vorzugsweise im stromlosen Zustand mit dem sich rotatorisch bewegenden Teil unter Vorspannung einer Feder zusammenwirkt.

Bei einer anderen vorteilhaften Weiterbildung der Erfindung ist zwischen Elektromotor und Untersetzungsgetriebe ein Planetengetriebe angeordnet, wobei das rotatorisch sich bewegende Teil ein die Planetenräder des Planetengetriebes tragender Planetenradträger ist. Der Planetenradträger ist dabei mit mindestens einer Aussparung versehen, in die der Stößel einführbar ist.

Eine weitere vorteilhafte Ausführung der Erfindung sieht vor, dass das rotatorisch sich bewegende Teil eine mit der Gewindespindel zusammenwirkende Gewindemutter ist.

Bei der erstgenannten Ausführung, bei der die Feststellvorrichtung als Reibbremse ausgeführt ist, ist es besonders vorteilhaft, wenn sowohl der Stößel als auch das sich rotatorisch bewegende Teil mit einer Reibfläche versehen sind.

Bei einer vorteilhaften Weiterbildung des Erfindungsgegenstandes ist der Stößel konisch ausgebildet und wirkt mit einer an dem den Reibbelägen abgewandten Ende der Gewindemutter ausgebildeten konischen Fläche zusammen.

Bei der zweitgenannten Ausführung, bei der die Feststellvorrichtung als Arretiereinheit ausgeführt ist, ist es besonders vorteilhaft, wenn der Stößel in einer im rotatorisch sich bewegenden Teil vorgesehenen Aussparung verklemmt wird.

Bei einer besonders kompakt bauenden Ausführung der vorhin genannten Art weist der Stößel eine Anschrägung auf, die mit mindestens einer am rotatorisch sich bewegenden Teil vorgesehenen, die Aussparung begrenzenden Schräge zusammenwirkt. Durch diese Maßnahme wird insbesondere der Hub und der Energiebedarf des vorhin erwähnten Hubmagneten minimiert.

Die Erfindung wird in der nachfolgenden Beschreibung von zwei Ausführungsbeispielen unter Bezugnahme auf die beiliegende Zeichnung näher erläutert. In der Zeichnung zeigt:
- Fig. 1: eine erste Ausführung der erfindungsgemäßen, elektromechanisch betätigbaren Scheibenbremse im Axialschnitt,
- Fig. 2: einer zweiten Ausführung der erfindungsgemäßen Scheibenbremse im Axialschnitt, und
- Fig. 3: einen Ausschnitt einer dritten Ausführung einer bei der erfindungsgemäßen Scheibenbremse verwendeten Feststellvorrichtung.

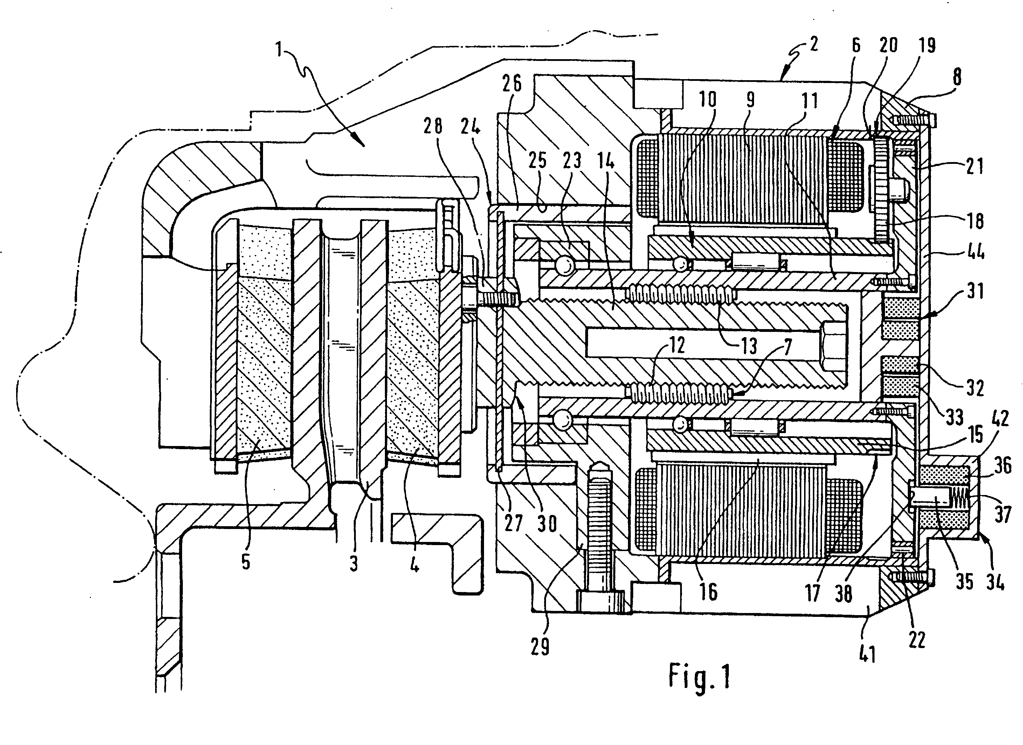

Die in Fig. 1 der Zeichnung dargestellte, elektromechanisch betätigbare Scheibenbremse nach der Erfindung, die im gezeigten Beispiel als eine Schwimmsattel-Scheibenbremse ausgebildet ist, besteht im wesentlichen aus einem in einem nicht gezeigten feststehenden Halter verschiebbar gelagerten Bremssattel 1 sowie einer Betätigungseinheit 2, deren Gehäuse 8 mittels nicht gezeigter Befestigungselemente am Bremssattel 1 angeordnet ist. Reibbeläge 4 und 5 sind im Bremssattel 1 derart angeordnet, daß sie der rechten und der linken Seitenfläche einer Bremsscheibe 3 zugewandt sind.

Nachstehend wird der in der Zeichnung rechts gezeigte Reibbelag 4 als erster Reibbelag und der andere, mit 5 bezeichnete Reibbelag als zweiter Reibbelag bezeichnet.

Während der erste Reibbelag 4 mittels eines Betätigungselements 30 durch die Wirkung einer von der Betätigungseinheit 2 aufgebrachten Betätigungskraft direkt mit der Bremsscheibe 3 in Eingriff bringbar ist, wird der zweite Reibbelag 5 durch die Wirkung einer bei der Betätigung der Anordnung vom Bremssattel 1 aufgebrachten Reaktionskraft gegen die gegenüberliegende Seitenfläche der Bremsscheibe 3 gedrückt.

Die vorhin erwähnte Betätigungseinheit 2 besteht aus einem Elektromotor 6, der im dargestellten Beispiel als ein permanentmagneterregter, elektronisch kommutierbarer (Torque-) Motor ausgebildet ist, dessen Stator 9 unbeweglich im Gehäuse 8 angeordnet ist und dessen Rotor 10 bzw. Hohlwelle durch einen ringförmigen Träger 15 gebildet ist, der mehrere Permanentmagnetsegmente 16 trägt. Zwischen dem Torque-Motor 6 und dem vorhin erwähnten, vorzugsweise koaxial zum Motor 6 angeordneten Betätigungselement 30 ist wirkungsmäßig ein Untersetzungsgetriebe 7 angeordnet, das im gezeigten Beispiel als ein Rollengewindetrieb 11 bis 14 ausgebildet ist. Der Rollengewindetrieb besteht dabei im wesentlichen aus einer Gewindemutter 11 sowie einer Gewindespindel 14, wobei zwischen Gewindemutter 11 und Gewindespindel 14 Gewinderollen 12,13 achsparallel angeordnet sind, die bei einer Rotationsbewegung der Gewindemutter 11 sich planetenartig drehen und die Gewindespindel 14 in eine translatorische Bewegung versetzen.

Die Anordnung ist dabei vorzugsweise derart getroffen, daß die Gewindemutter 11 vom Rotor 10 des Torque-Motors 6 mittels eines Planetengetriebes 17,18,19,20,21 angetrieben wird. Das Planetengetriebe besteht aus einem Sonnenrad, das durch einen am Ende des Rotors 10 ausgebildeten verzahnten Bereich 17 gebildet ist, mehreren Planetenrädern, von denen eines dargestellt und mit dem Bezugszeichen 18 versehen ist, einem Hohlrad 19, das durch eine im Gehäuse 8 ausgebildete Innenverzahnung 20 gebildet ist, sowie einem Planetenradträger 21, der vorzugsweise am Ende der gewindemutter 11 befestigt ist. Die Lagerung des Planetenradträgers 21 im Gehäuse 8 der Betätigungseinheit 2 erfolgt mittels eines Radiallagers 22. An ihrem anderen Ende ist die Gewindemutter 11 in einem axiale und radiale Kräfte aufnehmenden Lager 23 gelagert, das in einem im Bremssattel 1 angeordneten Lagerhalter 29 vorgesehen ist. Durch die Anordnung des Planetengetriebes 17 - 21 auf der den Reibbelägen 4, 5 abgewandten Seite des Gehäuses 8, also in einem Bereich, in dem keine Ovalisierung des Hohlrades 19 durch zuspannkräfte stattfindet, wird eine Erhöhung des Wirkungsgrades der erfindungsgemäßen Bremse erreicht. Auch kann das Zahnflankenspiel zur Verbesserung der Spannkraftrekonstruktions- und Regelgüte verringert werden. Der vorhin erwähnte Lagerhalter 29 kann dabei vorzugsweise eine nicht dargestellte Spannkraftsensorik aufnehmen, da über ihn die gesamten Spannkräfte abgestützt werden.

Das vorhin erwähnte Betätigungselement 30 wird dabei durch die Gewindespindel 14 gebildet, deren dem ersten Reibbelag 4 zugewandtes Ende mit einer linearen Führung zusammenwirkt, die mit dem Bezugszeichen 24 versehen ist. Die Führung 24 ist im in Fig. 1 gezeigten Beispiel durch einen in einer Bohrung 25 im Bremssattel 1 axial verstellbaren Zylinder 26 gebildet, der an seinem dem ersten Reibbelag 4 zugewandten Ende eine metallische Platte 27 geringer Materialdicke trägt, über deren mittleren Bereich die Kraftübertragung von der Gewindespindel 14 auf den ersten Reibbelag 4 erfolgt. Die Platte 27, die vorzugsweise aus Federstahl besteht, ist in der Kraftübertragungsrichtung biegeweich, in Querrichtung jedoch biegesteif ausgestaltet. Zwischen der Platte 27 und dem ersten Reibbelag 4 ist ein Kraftübertragungsteil bzw. ein Druckpilz 28 vorgesehen, der mit der Gewindespindel 14 beispielsweise mittels eines Gewindebolzens verbunden ist. Durch die beschriebene Ausgestaltung der linearen Führung 24 bzw. 26, 27 wird erreicht, daß sich der am ersten Reibbelag 4 axial anliegende Druckpilz 28 einerseits durch die Bewegung des Zylinders 26 in der Bohrung 25 und andererseits auch noch durch Verbiegen der Platte 27 in axialer Richtung bewegen kann, wobei die auf den Druckpilz 28 einwirkenden Querkräfte über den Zylinder 26 direkt in den Bremssattel 1 abgeleitet werden. Wenn sich beim Anliegen der Reibbeläge 4, 5 an der Bremsscheibe 3 der Zylinder 26 unter Einwirkung der dabei auftretenden Umfangskräfte verkeilt, wird der restliche Betätigungsweg der Beläge 4, 5 (beispielsweise ca 1 mm bei 25 kN) durch axiales Verformen der Federplatte 27 zurückgelegt.

Um den Rollengewindetrieb 7 exakt positionieren sowie Steuersignale für eine elektronische Kommutierung des Torque-Motors 6 gewinnen zu können, ist im Gehäuse 8 der Betätigungseinheit 2 ein kontaktloser Meßwert- bzw. Winkelgeber vorgesehen. Im dargestellten Beispiel wird als Meß- bzw. Winkelgeber ein sogenannter Resolver 31 verwendet, der aus zwei koaxial zueinander durch einen Luftspalt voneinander getrennten Ringen 32,33 besteht, die elektrische Wicklungen tragen. Der radial innenliegende Ring 32 ist dabei mit der Gewindemutter 11 verbunden, während der andere, radial äußere Ring 33 drehfest im Gehäuse 8 angeordnet ist.

Denkbar ist jedoch auch eine andere, nicht dargestellte Ausführung, bei der in dem für den vorhin erwähnten Resolver vorgesehenen Raum ein Radiallager angeordnet ist, das der Lagerung der Gewindemutter bzw. des mit ihr verbundenen Planetenradträgers dient.

Um schließlich die im Betrieb des Torque-Motors 6 entstehende Wärme wirksam an die Umgebung weiterleiten zu können, ist das Gehäuse 8 mit großflächigen Kühlrippen 41 versehen.

Um bei der oben beschriebenen erfindungsgemäßen Scheibenbremse eine Feststellbremsfunktion realisieren zu können ist eine Feststellvorrichtung 34 vorgesehen, die bei dem in Fig. 1 gezeigten Beispiel mit dem vorhin erwähnten Planetenradträger 21 zusammenwirkt. Die Feststellvorrichtung 34, die in einem Feststellbremsgehäuse 42 angeordnet ist, das an einem das Gehäuse 8 der Betätigungseinheit 2 verschließenden Deckel 44 angeformt ist, ist bei der gezeigten Ausführung als Arretiereinheit ausgebildet und besteht im wesentlichen aus einem Stößel 35, der unter der Wirkung einer Feder 37 in eine im Planetenradträger 21 ausgebildete Aussparung 38 hineingreift und mittels eines elektromechanischen Wandlers betätigbar ist, der im gezeigten Beispiel als Hubmagnet 36 ausgeführt ist.

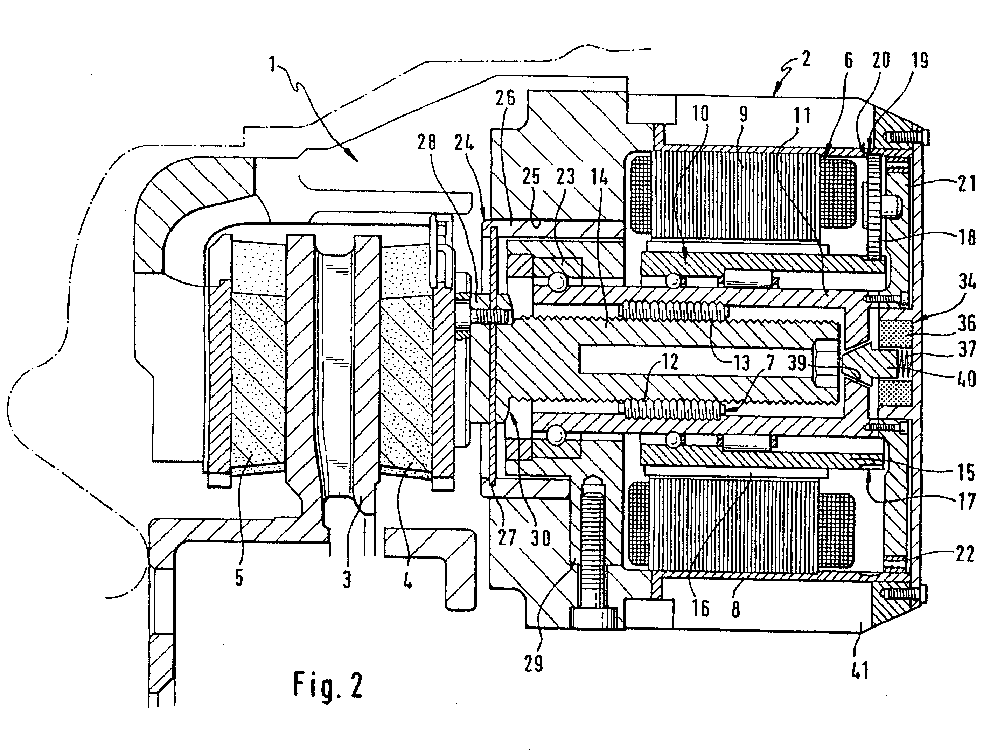

Bei der in Fig. 2 gezeigten zweiten Ausführung des Erfindungsgegenstandes wirkt die vorhin erwähnte Feststellvorrichtung 34, die im dargestellten Beispiel als Reibbremse ausgeführt ist, mit der Gewindemutter 11 zusammen. Wie in Fig. 2 dargestellt, ist der Stößel 40 konisch ausgeführt und wird unter der Vorspannung der Feder 37 mit einer in der Gewindemutter 11 ausgebildeten konischen Ringfläche 39 in Eingriff gebracht. Um die gewünschte Reibung zu erhöhen können sowohl die Oberfläche des konisch gestalteten Stößels 40 als auch die Ringfläche 39 als Reibflächen ausgebildet sein. Eine derartige Ausführung der Feststellvorrichtung 34 hat den Vorteil, daß bei einem Ausfall der Feststellfunktion, beispielsweise durch Defekt am Hubmagneten 36, die Bremse dennoch gelöst werden kann, und zwar durch Aufbringen eines Moments durch den Elektromotor 6, das größer ist als das zur Überwindung des erwähnten Reibmoments erforderliche Moment.

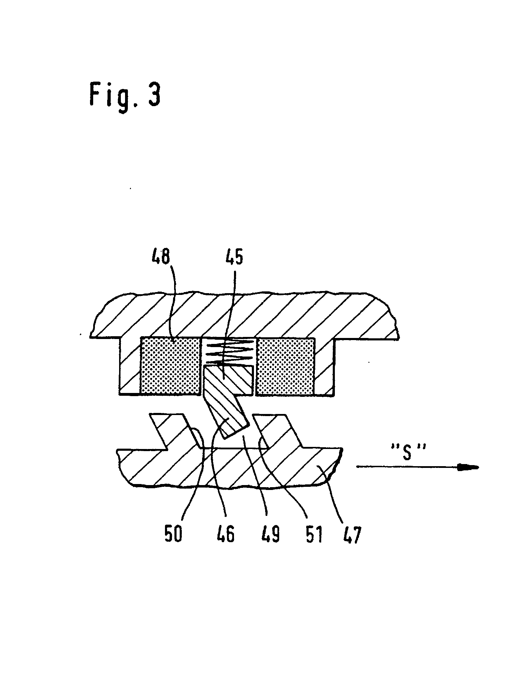

In Fig. 3 ist eine andere Ausführung der als Feststellvorrichtung dienenden Arretiereinheit dargestellt. Der mit einer Anschrägung 46 versehene Stößel 45 wird beim Realisieren der Feststellfunktion in im rotierenden Teil 47 ausgebildete Aussparungen eingeführt, von denen in Fig. 3 eine gezeigt und mit dem Bezugszeichen 49 versehen ist. Die Aussparung 49, deren Breite wesentlich größer als die Breite des Stößels 45 gewählt ist, ist dabei vorzugsweise von zwei Schrägen 50, 51 begrenzt, deren Steigung der der Anschrägung 46 des Stößels 45 entspricht. Da durch die Anschrägung 46 der Stößel 45 zum Lösen durch weiteres Zuspannen der Bremse zurückgedrückt wird, kann der Hubmagnet 48 kleiner ausgeführt werden. Durch diese Maßnahme wird die Eintauchtiefe des Stößels 45 im Hubmagneten 48 erhöht. Die Spannrichtung des rotierenden Teils 47 ist durch einen Pfeil "S" angedeutet.

Bei der Realisierung der Feststellfunktion wird folgendermaßen vorgegangen:

Die Betriebsbremse wird durch Betätigen des Elektromotors 6 auf eine Zuspannkraft eingestellt, die der gewünschten Feststellkraft entspricht. Anschließend wird der elektromechanische Wandler bzw. Hubmagnet 36 der Feststellvorrichtung stromlos geschaltet. Im Falle der Ausführung der Feststellvorrichtung als Arretiereinheit wird die Betriebsbremse sodann bei gleichzeitiger Überwachung der Bewegung des Rotors 10,der Gewindemutter 11 bzw. des Planetenradträgers 21 stromgeregelt solange zurückgefahren, bis der dem Elektromotor 6 zugeführte Strom (bzw. der Strom, abgeleitet nach der Rotorabgeleitet nach der Rotorposition) über eine bestimmte Schwelle ansteigt (Blockierung). Beim Lösen der Feststellfunktion wird der elektromechanische Wandler bzw. Hubmagnet 36 bestromt, wodurch der Stößel 35 aus der Aussparung 38 zurückgezogen wird bzw. die beiden Reibpartner 39, 40 (Fig. 2) außer Eingriff gebracht werden. Im Falle der Ausführung der Bremse als Arretiereinheit wird die Bremse positionsgeregelt weiter zugespannt, bis mindestens eine Aussparungsbreite des Planetenradtrrägers 21 durchfahren wurde (dies ist ein Zeichen dafür, daß der Stößel 35 aus der Aussparung 38 herausgezogen wurde).

### Bezugszeichenliste

- 1: Bremssattel
- 2: Betätigungseinheit
- 3: Bremsscheibe
- 4: Reibbelag
- 5: Reibbelag
- 6: Elektromotor
- 7: Untersetzungsgetriebe
- 8: Gehäuse
- 9: Stator
- 10: Rotor
- 11: Gewindemutter
- 12: Gewinderolle
- 13: Gewinderolle
- 14: Gewindespindel
- 15: Träger
- 16: Permanentmagnetsegment
- 17: Sonnenrad, Bereich
- 18: Planetenrad
- 19: Hohlrad
- 20: Innenverzahnung
- 21: Planetenradträger
- 22: Radiallager
- 23: Lager
- 24: Führung
- 25: Bohrung
- 26: Zylinder
- 27: Platte
- 28: Kraftübertragungsteil, Druckpilz
- 29: Lagerhalter
- 30: Betätigungselement
- 31: Resolver
- 32: Ring
- 33: Ring
- 34: Feststellvorrichtung
- 35: Stößel
- 36: Hubmagnet
- 37: Feder
- 38: Aussparung
- 39: Fläche
- 40: Stößel
- 41: Rippe
- 42: Feststellbremsgehäuse
- 43 44: Deckel
- 45: Stößel
- 46: Anschrägung
- 47: Teil
- 48: Hubmagnet
- 49: Aussparung
- 50: Schräge
- 51: Schräge

## Patentansprüche

1. Scheibenbremse für Kraftfahrzeuge, die mittels eines Elektromotors (6) unter Zwischenschaltung eines ein axial bewegliches Teil (14) aufweisenden Untersetzungsgetriebes (7) betätigbar ist, mit einem Bremssattel (1), mit.zwei mit je einer Seitenfläche einer Bremsscheibe (3) zusammenwirkenden, im Bremssattel (1) begrenzt verschiebbar angeordneten Reibbelägen (4,5), wobei einer (4) der Reibbeläge (4,5) durch die vom axial beweglichen Teil (14) aufgebrachten Betätigungskraft direkt und der andere Reibbelag (5) durch die Wirkung einer vom Bremssattel (1) aufgebrachten Reaktionskraft mit der Bremsscheibe (3) in Eingriff bringbar ist, wobei eine Feststellvorrichtung (34) vorgesehen ist, die mit einem sich rotatorisch bewegenden Teil (11) des Untersetzungsgetriebes (7) oder einem mit dem Untersetzungsgetriebe (7) in kraftübertragender Verbindung stehenden Teil (21) im Sinne dessen Blockierens zusammenwirkt, **dadurch gekennzeichnet, dass** die Feststellvorrichtung (34) als Arretiereinheit ausgeführt ist.

2. Scheibenbremse nach Anspruch 1, **dadurch gekennzeichnet, dass** die Feststellvorrichtung (34) durch einen mittels eines elektromechanischen Wandlers (36) betätigbaren Stößel (35, 40) gebildet ist, der mit dem sich rotatorisch bewegenden Teil (11,21) zusammenwirkt.

3. Scheibenbremse nach Anspruch 2, **dadurch gekennzeichnet, dass** der Stößel (35,40) im stromlosen Zustand mit dem sich rotatorisch bewegenden Teil (11,21) unter Vorspannung einer Feder (37) zusammenwirkt.

4. Scheibenbremse nach einem der Ansprüche 1 bis 3, **dadurch gekennzeichnet, dass** zwischen Elektromotor (6) und Untersetzungsgetriebe (7) ein Planetengetriebe (17 - 21) angegeordnet ist, und **dass** das rotatorisch sich bewegende Teil ein die Planetenräder (18) des Planetengetriebes (17 bis 21) tragender Planetenradträger (21) ist.

5. Scheibenbremse nach Anspruch 4, **dadurch gekennzeichnet, dass** der Planetenradträger (21) mit mindestens einer Aussparung (38) versehen ist, in die der Stößel (35) einführbar ist.

6. Scheibenbremse nach einem der vorhergehenden Ansprüche 1 bis 5, **dadurch gekennzeichnet, dass** das rotatorisch sich bewegende Teil eine mit der Gewindespindel (14) zusammenwirkende Gewindemutter (11) ist.

7. Scheibenbremse nach nach einem der vorhergehenden Ansprüche 1 bis 5, **dadurch gekennzeichnet, dass** sowohl der Stößel (40) als auch das sich rotatorisch bewegende Teil (11) mit einer Reibfläche versehen sind.

8. Scheibenbremse nach Anspruch 7 **dadurch gekennzeichnet, dass** der Stößel (40) konisch ausgebildet ist und mit einer an dem den Reibbelägen (4,5) abgewandten Ende der Gewindemutter (11) ausgebildeten konischen Fläche (39) zusammenwirkt.

9. Scheibenbremse nach einem der Ansprüche 1 bis 5 **dadurch gekennzeichnet, dass** der Stößel (35, 45, 46) in einer im rotatorisch sich bewegenden Teil (21,47) vorgesehenen Aussparung (38,49) verklemmt wird.

10. Scheibenbremse nach Anspruch 9 **dadurch gekennzeichnet, dass** der Stößel (45) eine Anschrägung (46) aufweist, die mit mindestens einer am rotatorisch sich bewegenden Teil (47) vorgesehenen, die Aussparung (49) begrenzenden Schräge (50, 51) zusammenwirkt.

## Claims

1. Disc brake for motor vehicles which can be actuated by means of an electric motor (6) with the interconnection of a reduction gear (7), provided with an axially movable part (14), and which includes a brake caliper (1), two friction linings (4,5), each of them cooperating with one lateral surface each of a brake disc (3) and arranged within the brake caliper (1) so as to be displaceable therein to a limited extent, with one (4) of the friction linings (4,5) being movable into engagement with the brake disc (3) directly by the actuating force applied by the axially movable part (14) and the other friction lining (5) by the action of a reaction force applied by the brake caliper (1), wherein an arresting device (34) is provided which cooperates with a rotating part (11) of the reduction gear (7) or with a part (21) having a power-transmitting connection to the reduction gear (7) so as to lock the latter,
**characterized in that** the arresting device (34) is constructed as a locking unit.

2. Disc brake as claimed in claim 1,
**characterized in that** the arresting device (34) is formed by a tappet (35, 40) actuatable by means of an electromechanical transmitter (36) and cooperating with the rotating part (11, 21).

3. Disc brake as claimed in claim 2,
**characterized in that**, in the de-energized condition, the tappet (35, 40) cooperates with the rotating part (11,21) under the prestress of a spring (37).

4. Disc brake as claimed in anyone of claims 1 through 3,
**characterized in that** a planetary gear (17 - 21) is arranged between electric motor (6) and reduction gear (7), and **in that** the rotating part is a planet carrier (21) carrying the planet wheels (18) of the planetary gear (17 through 21).

5. Disc brake as claimed in claim 4,
**characterized in that** the planet carrier (21) is provided with at least one recess (38) into which the tappet (35) can be introduced.

6. Disc brake as claimed in anyone of the preceding claims 1 through 5,
**characterized in that** the rotating part is a threaded nut (11) cooperating with the threaded spindle (14).

7. Disc brake as claimed in anyone of the preceding claims 1 to 5,
**characterized in that** both the tappet (40) and the rotating part (11) are provided with a friction surface.

8. Disc brake as claimed in claim 7,
**characterized in that** the tappet (40) features a conical design and cooperates with a conical surface (39) provided on the end of the threaded nut (11) which is averted from the friction linings (4,5).

9. Disc brake as claimed in anyone of claims 1 to 5,
**characterized in that** the tappet (35,45,46) is clamped within a recess (38,49) provided in the rotating part (21, 47).

10. Disc brake as claimed in claim 9,
**characterized in that** the tappet (45) has an angular portion (46) which cooperates with at least one slope surface (50, 51) provided on the rotating part (47) and confining the recess (49).

## Revendications

1. Frein à disque pour véhicule automobile qui peut être actionné au moyen d'un moteur électrique (6) par interposition d'un démultiplicateur (7) comportant un élément (14) mobile axialement, avec un étrier de frein (1), avec deux garnitures de friction (4, 5) coopérant chacune avec une surface latérale d'un disque de frein (3) et disposées de manière à pouvoir coulisser dans une mesure limitée dans l'étrier de frein (1), l'une (4) des garnitures de friction (4, 5) pouvant être amenée directement en engagement avec le disque de frein (3) par la force d'actionnement appliquée par l'élément (14) mobile axialement, et l'autre garniture de friction (5) par l'action d'une force de réaction appliquée par l'étrier de frein (1), un dispositif de blocage (34) étant prévu qui coopère avec un élément (11) tournant du démultiplicateur (7) ou un élément (21) en liaison de transmission des forces avec le démultiplicateur (7) dans le sens de son blocage, **caractérisé en ce que** le dispositif de blocage (34) est réalisé sous la forme d'une unité d'arrêt.

2. Frein à disque selon la revendication 1, **caractérisé en ce que** le dispositif de blocage (34) est formé par un poussoir (35, 40) pouvant être actionné au moyen d'un convertisseur électromécanique (36), lequel poussoir coopère avec l'élément (11, 21) tournant.

3. Frein à disque selon la revendication 2, **caractérisé en ce qu'**à l'état non parcouru par un courant, le poussoir (35, 40) coopère avec l'élément (11, 21) tournant sous la précontrainte d'un ressort (37).

4. Frein à disque selon l'une des revendications 1 à 3, **caractérisé en ce qu'**un engrenage planétaire (17-21) est disposé entre le moteur électrique (6) et le démultiplicateur (7), et **en ce que** l'élément tournant est un porte-satellites (21) portant les pignons satellites (18) de l'engrenage planétaire (17 à 21).

5. Frein à disque selon la revendication 4, **caractérisé en ce que** le porte-satellites (21) est pourvu d'au moins une découpe (38) dans laquelle le poussoir (35) peut être introduit.

6. Frein à disque selon l'une des revendications 1 à 5 précédentes, **caractérisé en ce que** l'élément tournant est un écrou taraudé (11) coopérant avec la broche filetée (14).

7. Frein à disque selon l'une des revendications 1 à 5 précédentes, **caractérisé en ce que** le poussoir (40) comme l'élément tournant (11) sont pourvus d'une surface de friction.

8. Frein à disque selon la revendication 7, **caractérisé en ce que** le poussoir (40) est réalisé conique et coopère avec une surface conique (39) réalisée à l'extrémité de l'écrou taraudé (11), opposée aux garnitures de friction (4, 5).

9. Frein à disque selon l'une des revendications 1 à 5, **caractérisé en ce que** le poussoir (35, 45, 46) est coincé dans une découpe (38, 49) prévue dans l'élément tournant (21, 47).

10. Frein à disque selon la revendication 9, **caractérisé en ce que** le poussoir (45) présente un chanfrein (46) qui coopère avec au moins une surface oblique (50,51) prévue sur l'élément tournant (47) et délimitant la découpe (49).
